# EUROPEAN PATENT SPECIFICATION

(11) **EP 3 023 264 B1**
(45) Date of publication and mention of the grant of the patent: **18.12.2019**
(21) Application number: 14826174.6
(22) Date of filing: 14.07.2014
(51) Int. Cl.: B60C 9/00, B60C 9/20, D02G 3/48, D07B 1/06

(54) **STEEL CORD FOR TIRE REINFORCEMENT**
STAHLSEIL ZUR REIFENVERSTÄRKUNG
CÂBLE EN ACIER POUR RENFORT DE PNEU

(30) Priority: 15.07.2013 KR 20130083158
(43) Date of publication of application: 25.05.2016
(73) Proprietor: Hongduk Industrial Co. Ltd., Pohang-si, Gyeongsangbuk-do 790-240 (KR)
(72) Inventor: LEE, Byung Ho, Pohang-si Gyeongsangbuk-do 791-754 (KR); LEE, Kwang Jin, Pohang-si Gyeongsangbuk-do 790-760 (KR)
(74) Representative: Steiniger, Carmen
(86) International application number: PCT/KR2014/006316
(87) International publication number: WO 2015/008996

(56) References cited:
- EP-A2- 2 000 291
- JP-A- H08 118 907
- JP-A- 2002 275 772
- JP-A- 2004 175 134
- KR-A- 20110 009 483
- KR-A- 20110 009 484
- KR-B1- 100 366 069
- KR-B1- 101 152 415
- US-A1- 2004 250 936

## Description

### TECHNICAL FIELD

The present invention relates to a steel cord for tire reinforcement, and more particularly, to a steel cord for tire reinforcement, the steel cord having a three-dimensional (3D) form in which a plurality of strands are twisted with each other, a plurality of waveforms are included and formed to overlap with each other, and an inclined angle greater than 0 is formed between normals on waveform surfaces of the plurality of waveforms.

### BACKGROUND ART

Recently, the demand for tires with high performance such as light weight for saving resources, durability for long-time use, and excellent cornering and ride comfort has increased. Various materials have been developed and used to reinforce tires in response to such demands.

A steel cord for tire reinforcement, from among various types of reinforcing materials used to reinforce various rubber products such as vehicle tires or industrial belts, has excellent properties such as strength, modulus, thermal conductivity, fatigue resistance, rubber adhesiveness, and the like. As such, since a steel cord is an appropriate member to provide the above-described properties required for a tire, a steel core has been widely used as a tire reinforcing material and use of steel cords has increased.

To enhance tire performance, there is a need for the development of a steel cord for tire reinforcement having a small thickness, light weight, and excellent properties such as strength, a modulus, thermal conductivity, fatigue resistance, rubber adhesiveness, and the like.

In the related art, a steel cord for tire reinforcement having a structure of twisted strands or having a circular cross-section may have a problem such that residual rotation stress or change of the linearity of the steel cord for tire reinforcement due to a material of a wire or a mechanical factor caused by a cord drawing device or a stranding device. Particularly, since the residual rotation stress may be greatly changed, a test for the residual rotation stress is conducted on each product at a general quality assurance level. Accordingly, a method of using a steel cord for tire reinforcement having a non-circular cross-section has been proposed.

In US 2004-250936, JP 2002-275772, JP 2004-175134, and EP 2000291, the steel cord has a substantially spiral or a substantially planar wavy deformation. However, even in the case of a steel cord for tire reinforcement having a non-circular cross-section, or having a substantially spiral or a substantially planar wavy deformation, there is a limit in expanding a cross-sectional projection area of the steel cord for tire reinforcement. Additionally, if the number of strands is increased or a diameter of the strands is increased, a problem such as cost increase or degradation of rubber penetration may occur.

### DETAILED DESCRIPTION OF THE INVENTION

### TECHNICAL PROBLEM

The present invention is to solve a problem. The present invention provides a steel cord for tire reinforcement, the steel cord having a three-dimensional (3D) form in which a plurality of waveforms are formed to overlap with each other and an inclined angle of greater than 0 is defined between normals on waveform surfaces of the respective plurality of waveforms.

According to an exemplary embodiment of the present invention, there is provided a steel cord being configured to be elongated in one direction and including a plurality of strands periodically twisted with each other, wherein the steel cord for tire reinforcement has a first waveform having a first waveform surface and a second waveform having a second waveform surface, and the first waveform and the second waveform are formed to overlap with each other, and a normal on the first waveform surface of the first waveform and a normal on the second waveform surface of the second waveform form a predetermined inclined angle.

The plurality of strands may include 1 to 18 strands, a diameter of each of the plurality of strands may be about 0.08 mm to about 0.5mm, and a tensile strength of each of the plurality of strands may be about 250 kgf/mm² to about 500 kgf/mm².

A twist pitch of the plurality of strands may be about 10 to about 50 times a diameter of each of the plurality of strands.

A pitch of the first waveform and a pitch of the second waveform may be different from each other.

A pitch of the first waveform and a pitch of the second waveform may be less than a twist pitch of the plurality of strands.

According to an exemplary embodiment of the present invention, there is provided a method of manufacturing the steel cord for tire reinforcement, wherein the steel cord is configured to be elongated in one direction and include a plurality of strands periodically twisted with each other wherein the steel cord for tire reinforcement has a first waveform having a first waveform surface and a second waveform having a second waveform surface, and the first waveform and the second waveform are formed to overlap with each other, and a normal on the first waveform surface of the first waveform and a normal on the second waveform surface of the second waveform form a predetermined inclined angle, and the method may include: forming the steel cord for tire reinforcement by twisting the plurality of strands; forming the steel cord for tire reinforcement having a non-circular cross-section by rolling the steel cord for tire reinforcement; and performing a shaping process by passing the steel cord for tire reinforcement through a first shaping gear couple and a second shaping gear couple, wherein a rotation axis of the first shaping gear couple and a rotation axis of the second shaping gear couple form a certain inclined angle.

A gear pitch of the first shaping gear couple and a gear pitch of the second shaping gear couple may be different from each other.

A pitch of the first shaping gear couple and a pitch of the second shaping gear couple may be less than a twist pitch of the plurality of strands.

### ADVANTAGEOUS EFFECTS OF THE INVENTION

In the present invention, a steel cord for tire reinforcement is formed as a 3D steel cord for tire reinforcement in which a first waveform having a first waveform surface and a second waveform having a second waveform surface are included and the first waveform surface and the second waveform surface are formed to respectively have a direction different from each other. Thus, when the steel cord for tire reinforcement is buried in rubber, an area in which the steel cord for tire reinforcement contacts the rubber may be expanded. Additionally, as a space between strands may be enlarged according to a shaping process and rubber may penetrate into the space, penetrability of rubber into the steel cord 1 for tire reinforcement may be enhanced.

Additionally, in the present invention, as a steel cord for tire reinforcement has a non-circular cross-section, the steel cord for tire reinforcement may have a low flexural strength in a direction of a short diameter and a high flexural strength in a direction of a long diameter. Accordingly, a plurality of effects may be obtained by using the steel cord for tire reinforcement, by changing a disposition of the steel cord for tire reinforcement according to a user selection. For example, in the present invention, if the steel cord for tire reinforcement is used for tire reinforcement, a tire having ride comfort improved and allowing stable cornering may be implemented according to a disposition of the steel cord for tire reinforcement.

### DESCRIPTION OF THE DRAWINGS

FIG. 1 is a diagram illustrating a strand forming the steel cord for tire reinforcement according to an exemplary embodiment;
FIG. 2 is a diagram illustrating the strand forming the steel cord for tire reinforcement according to an exemplary embodiment;
FIG. 3 is a diagram illustrating the strand forming the steel cord for tire reinforcement according to an exemplary embodiment;
FIG. 4 is a diagram illustrating the steel cord for tire reinforcement according to an exemplary embodiment;
FIG. 5 is a diagram illustrating the steel cord for tire reinforcement according to an exemplary embodiment;
FIG. 6 is a diagram illustrating a method of manufacturing the steel cord for tire reinforcement according to an exemplary embodiment;
FIG. 7 is a diagram illustrating a method of manufacturing the steel cord for tire reinforcement according to an exemplary embodiment;
FIG. 8 is a diagram illustrating a tire including the steel cord for tire reinforcement according to an exemplary embodiment; and
FIG. 9 is a diagram illustrating a belt layer of a tire including the steel cord for tire reinforcement according to an exemplary embodiment.

### BEST MODE

The present invention relates to a steel cord for tire reinforcement, and more particularly, to a steel cord for tire reinforcement, the steel cord having a three-dimensional (3D) form in which a plurality of strands are twisted with each other, a plurality of waveforms are formed to overlap with each other, and an inclined angle of greater than 0 is formed between normals on waveform surfaces of the plurality of waveforms.

### MODE OF THE INVENTION

Hereinafter, exemplary embodiments of the present invention will be described in detail with reference to the attached drawings.

Advantages and features of the present invention and methods of accomplishing the same may be understood more readily with by reference to the following detailed description of exemplary embodiments and the accompanying drawings. However, the invention is not limited to the embodiments set forth herein, and may be embodied in many different forms. The embodiments are provided so that this disclosure will be thorough and complete, and will fully convey the concept of the inventive concept to those skilled in the art, and the scope of the inventive concept should be defined by the appended claims. Like reference numerals in the drawings denote like elements.

Spatially relative terms "below", "on", "side" are used to facilitate describing a relationship between a member or component and the other members or components as shown in a drawing. Spatially relative terms are to be understood as a term that includes other directions of the element in use or operation in addition to the direction illustrated in the drawings. For example, when a member shown in the drawing is described as being "on" another member, if a member is turned upside down, the member may be placed "below" the other member. Thus, the exemplary term "on" may include both upward and downward directions. Members may be oriented in other directions, and thus, the spatially relative terms may be interpreted according to the orientation.

As used herein, the term is intended to illustrate the embodiments but is not intended to limit the invention. In this specification, the singular includes the plural unless specifically stated otherwise. It will be further understood that the terms "comprises," "comprising," "includes," and/or "including," when used herein, specify the presence of members, but do not preclude the presence or addition of one or more other members, unless otherwise specified.

Unless otherwise defined, all terms (including technical and scientific terms) used herein may be used as having a meaning that can be understood in common by one of ordinary skill in the art. The general term that is defined in a generally used dictionary are not interpreted ideally or excessively, unless otherwise defined explicitly and particularly.

A thickness and size of each part in the drawings may be exaggerated for convenience and clarity of description, or schematically illustrated. In addition, the size and area of each component does not fully reflect an actual size or area of the component.

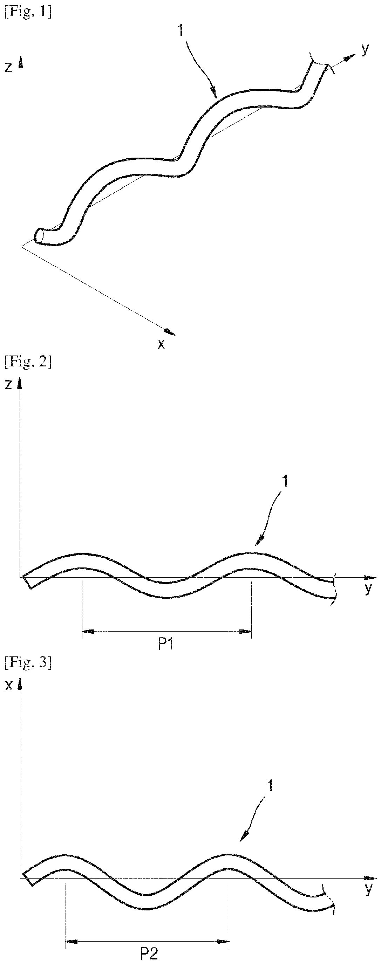

FIGS. 1 through 3 are diagrams illustrating an example of a strand forming the three-dimensional (3D) steel cord 1 for tire reinforcement according to an exemplary embodiment.

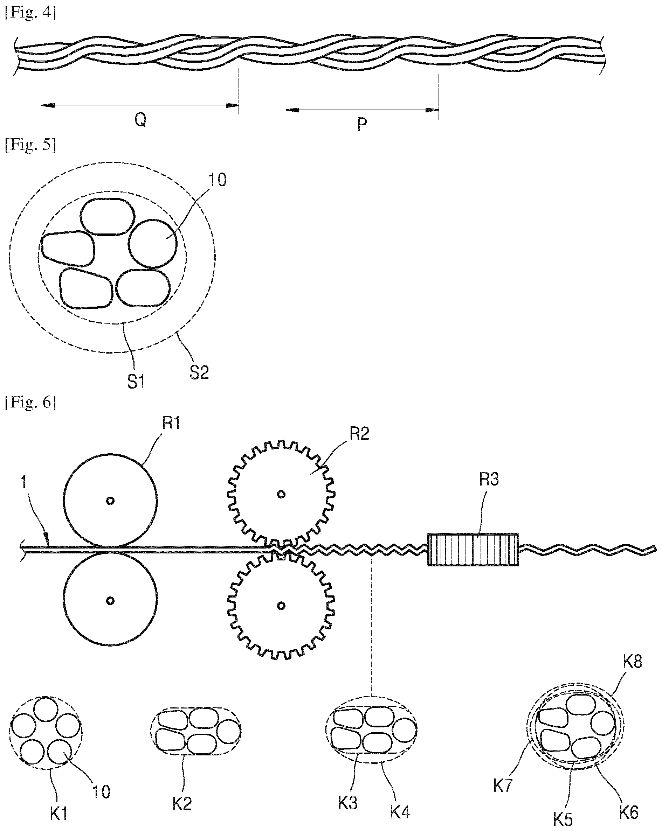

* Referring to FIG. 5, in the present invention, the 3D steel cord 1 for tire reinforcement is formed of a plurality of strands 10 that are periodically twisted with each other and include at least one selected from the group consisting of a first waveform and a second waveform. The first waveform and the second waveform are formed to overlap with each other and have waveform surfaces having angles different from each other.

In the present invention, the 3D steel cord 1 for tire reinforcement may be formed of a plurality of strands twisted periodically with each other. Preferably, in the present invention, the respective plurality of strands 10 forming the steel cord 1 for tire reinforcement may be the plurality of strands 10 obtained by plating a surface of a high-strength steel with brass.

In the present invention, a diameter of each of the plurality of strands 10 forming the steel cord 1 for tire reinforcement may be 0.08 mm to 0.5 mm. For example, if the diameter of the plurality of strands 10 is less than 0.08 mm or greater than 0.5 mm, it may be difficult to configure or process the steel cord 1 for tire reinforcement, and a structure of the steel cord 1 for tire reinforcement may be non-uneven.

Preferably, according to an exemplary embodiment of the present invention, in the steel cord 1 for tire reinforcement, a twist pitch of the plurality of strands 10 may be configured to be 10 to 50 times a diameter of the strands 10.

Preferably, a tensile strength of the plurality of strands 10 may be 280 kgf/mm² to 500 kgf/mm². For example, if the tensile strength is greater than 500 kgf/mm², hardness of the material is too high, and thus, the plurality of strands 10 may be cut when the plurality of strands 10 are being processed. Accordingly, productivity of the steel cord 1 for tire reinforcement may deteriorate.

According to the present invention, the steel cord 1 for tire reinforcement includes a plurality of waveforms, for example, a first waveform and a second waveform.

The first waveform may be configured such that a unit waveform having a predetermined period is repeatedly formed over a longitudinal direction of the steel cord 1 for tire reinforcement. The second waveform may also be configured such that a unit waveform having a predetermined period is repeatedly formed over a longitudinal direction of the steel cord 1 for tire reinforcement.

The first waveform and the second waveform are formed to overlap with each other and respectively have waveform surfaces with angles different from each other. Here, a waveform surface refers to a surface onto which a waveform is orthogonally projected. In other words, the first waveform includes a first waveform surface having a first normal in a first direction, and the second waveform includes a second waveform surface having a second normal in a second direction. The first direction and the second direction may be different from each other. Accordingly, the first waveform surface and the second waveform surface may be formed to form a certain inclined angle. The angle may be preferably a right angle, but is not limited thereto.

For example, as shown in FIGS. 2 and 3, in the present invention, the steel cord 1 for tire reinforcement may extend in a y-axis direction, and have a first waveform having a z-y plane as a first waveform surface and an x-axis as a first normal, and a second waveform having an x-y plane as a second waveform surface and a z-axis as a second normal. Accordingly, in the present invention, the steel cord 1 for tire reinforcement may extend in a y-axis direction and, at a same time, have a first waveform surface formed on a z-y plane and a second waveform formed on an x-y plane to overlap with each other. As such, the steel cord 1 for tire reinforcement may be implemented as a 3D steel cord 1 for tire reinforcement.

In other words, in a related art, if a steel cord 1 for tire reinforcement is projected on a surface of a normal in a longitudinal direction, a projection shape is formed in the form of dots. If a two-dimensional (2D) steel cord 1 for tire reinforcement is projected on a surface of a normal in a longitudinal direction, a projection shape is formed in a one-dimensional (1D) form of a line. However, in the present invention, if the steel cord 1 for tire reinforcement is projected on a surface of a normal in a longitudinal direction, a 2D projection shape having a certain area on a plane may be formed. Accordingly, the 3D steel cord 1 for tire reinforcement extending in a longitudinal direction and having a certain area with respect to a surface of a normal in the longitudinal direction may be implemented.

As shown in FIGS. 2 and 3, a pitch PI of the first waveform and a pitch P2 of the second waveform may be different from each other. Accordingly, in the present invention, a 2D project surface may be formed in a longitudinal direction of the steel cord 1 for tire reinforcement, and thus, the reliable 3D steel cord 1 for tire reinforcement may be configured.

As shown in FIG. 4, a twist pitch Q of the plurality of strand 10 forming the steel cord 1 for tire reinforcement may be formed to be greater than a pitch PI or P2 of a waveform.

FIG. 5 is a diagram illustrating a cross-sectional view of the steel cord 1 for tire reinforcement according to an exemplary embodiment.

Referring to FIG. 5, in the present invention, the steel cord 1 for tire reinforcement may be formed of the plurality of strands 10 having a non-circular cross-section, and the steel cord 1 for tire reinforcement may have a non-circular cross-section. As described above, even though the cross-section of the steel cord 1 for tire reinforcement has an outer circumferential S1, since the cross-section of the steel cord 1 for tire reinforcement has a first waveform and a second waveform that overlap with each other, a projection surface in a longitudinal surface of the steel cord 1 for tire reinforcement has an outer circumference surface S2.

A plurality of non-circular strands 10 may be formed by rolling the steel cord 1 for tire reinforcement consisting of a strand 10 or by rolling each strand 10. For example, the steel cord 1 for tire reinforcement may be formed by twisting a plurality of the strands 10 with each other. Then, the steel cord 1 for tire reinforcement may be rolled, and thus, the plurality of strands 10 having a non-circular cross-section and the steel cord 1 for tire reinforcement having a non-circular cross-section and consisting of the plurality of strands 10 may be formed. A flatness ratio between a short diameter and a long diameter of the steel cord 1 for tire reinforcement having a non-circular cross-section may be 1.0 to 2.0. In other words, a cross-section of the steel cord 1 for tire reinforcement may have a short diameter and a long diameter, and a ratio therebetween may be 1.0 to 2.0. If a flatness ratio therebetween is greater than 2.0, a strand of the steel cord 1 for tire reinforcement may be cut, and thus, productivity may deteriorate.

Hereinafter, an effect of the steel cord 1 for tire reinforcement having such a structure is described in detail.

In the present invention, the steel cord 1 for tire reinforcement are formed as a 3D steel cord 1 for tire reinforcement which includes a first waveform having a first waveform surface and a second waveform having a second waveform surface, and in which the first waveform surface and the second waveform surface are formed to respectively have a direction different from each other. Thus, when the steel cord 1 for tire reinforcement is buried in rubber, an area in which the steel cord 1 for tire reinforcement contacts the rubber may be expanded. Additionally, as a space between the plurality of strands 10 may expand according to a shaping process and rubber may penetrate into the space, penetrability of rubber into the steel cord 1 for tire reinforcement may be enhanced.

Additionally, in the present invention, since the steel cord 1 for tire reinforcement has a non-circular cross-section, the steel cord 1 for tire reinforcement may have a low flexural strength in a direction of a short diameter and a high flexural strength in a direction of a long diameter. Accordingly, a plurality of effects may be obtained by using a steel cord 1 for tire reinforcement, by changing a disposition of the steel cord 1 for tire reinforcement according to a user selection. For example, in the present invention, if the steel cord 1 for tire reinforcement is used for tire reinforcement, a tire having ride comfort improved and allowing stable cornering may be implemented according to a disposition of the steel cord 1 for tire reinforcement. This is to be described later.

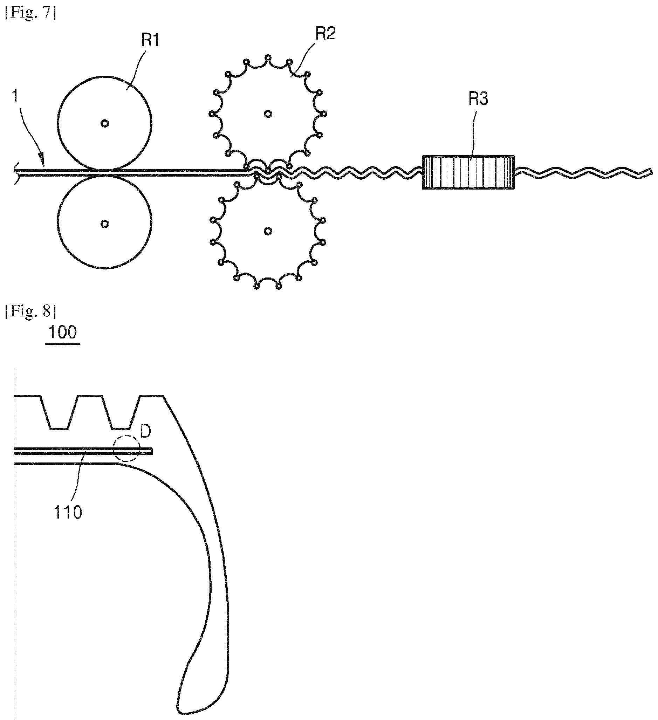

FIGS. 6 and 7 are diagrams illustrating a process of manufacturing the steel cord 1 for tire reinforcement according to an exemplary embodiment.

Referring to FIGS. 6 and 7, in the present invention, a process of manufacturing the steel cord 1 for tire reinforcement may include a process of forming the steel cord 1 for tire reinforcement by twisting the plurality of strands 10, a process of performing a rolling process, and a process of forming the steel cord 1 for tire reinforcement by performing a shaping process.

The steel cord 1 for tire reinforcement is formed by twisting the plurality of strands 10. As described above, each of the plurality of strands 10 may be formed by plating a surface of high-strength steel with brass. The plurality of strands 10 are periodically twisted, and thus, forms the steel cord 1 for tire reinforcement. The plurality of strands 10 may be twisted by using a certain stranding device. The formed steel cord 1 for tire reinforcement may have a circular cross-section K1.

Then, the steel cord 1 for tire reinforcement is provided to a rolling apparatus to perform a rolling process. The rolling process may be performed, for example, by putting the steel cord 1 for tire reinforcement into two rollers R1 and compressing the steel cord 1 for tire reinforcement, but is not limited thereto.

As the rolling process is performed, the plurality of strands 10 forming the steel cord 1 for tire reinforcement are compressed in a rolling direction. Thus, the plurality of strands 10 having a non-circular cross-section and the steel cord 1 for tire reinforcement having a non-circular cross-section K2 may be formed. A flatness ratio between a short diameter and a long diameter with respect to the non-circular cross-section K2 of the steel cord 1 for tire reinforcement may be 1.1 to 3.0.

Then, after the rolling process is performed on the steel cord 1 for tire reinforcement, a shaping process is performed on the steel cord 1 for tire reinforcement.

The shaping process may be performed by putting the steel cord 1 for tire reinforcement into a shaping apparatus, but is not limited thereto.

The shaping apparatus includes, for example, two shaping gear couples R2 and R3, and the shaping gear couples R2, R3 may be configured such that the two shaping gears interlock with each other with a certain gap therebetween. As shown in FIG. 6, the shaping gear couples R2, R3 may consist of, for example, two shaping gears having a shape of a gearwheel. Preferably, as shown in FIG. 7, a certain rounding part may be formed on a shaping gear or a certain protective unit may be provided with a gear so as to prevent damage or abrasion of the steel cord 1 for tire reinforcement in the shaping process. A size of each shaping gear or a space between teeth of the gear may be constant or arbitrary, but is not limited thereto.

As described above, a gear pitch of the first shaping gear couple R2 and a gear pitch of the second shaping gear couple R3 may be different from each other. A pitch of the first shaping gear couple R2 and the second shaping gear couple R3 may be formed to be smaller than a twist pitch of the plurality of strands 10.

As the steel cord 1 for tire reinforcement passes through a shaping apparatus, a shaping part having a certain waveform may be formed in the steel cord 1 for tire reinforcement. In other words, as the steel cord 1 for tire reinforcement is inserted between the two shaping gear couples R2 and R3 and the steel cord 1 for tire reinforcement passes through the two shaping gear couples R2 and R3, the steel cord 1 for tire reinforcement may be compressed by the steel cord 1 for tire reinforcement, and thus, may have a certain waveform. The two shaping gears of the two shaping gear couples R2 and R3 may be disposed to interlock with each other with a certain gap therebetween so that the steel cord 1 for tire reinforcement passes through the shaping gear couples R2 and R3, and thus, is compressed.

As the steel cord 1 for tire reinforcement passes through the first shaping gear couple R2, a first waveform may be formed. Then, as the steel cord 1 for tire reinforcement passes through the second shaping gear couple R3, a second waveform may be formed. A rotation axis of the first shaping gear couple R2 and a rotation axis of the second shaping gear couple R3 may be adjusted so that an axis of the first waveform with respect to a waveform surface and an angle with respect to a waveform surface are different from each other, and thus, the 3D steel cord 1 for tire reinforcement may be formed. For example, as shown in FIGS. 6 and 7, as a rotation axis of the first shaping gear couple R2 and a rotation axis of the second shaping gear couple R3 are orthogonal to each other, waveform surfaces of the first waveform and the second waveform may be orthogonal to each other, and a certain inclined angle between them may be formed by adjusting the rotation axis of the first shaping gear couple R2 or the rotation axis of the second shaping gear couple R3.

As described above, as the steel cord 1 for tire reinforcement passes through the first shaping gear couple R2 and the second shaping gear couple R3, a projection surface on which the steel cord 1 for tire reinforcement is projected in a longitudinal direction may be expanded. In other words, as the steel cord 1 for tire reinforcement passes through the first shaping gear couple R2, the cross-section K3 of the steel cord 1 for tire reinforcement may become greater than an area of a projection surface K4. Then, as the steel cord 1 for tire reinforcement passes through the second shaping gear couple R3, a cross-section K5 of the steel cord 1 for tire reinforcement may have an expanded projection surface K8 obtained as a projection surface K6 expanded by the first shaping gear couple R2 and a projection surface K7 expanded by the second shaping gear couple R3 overlap with each other.

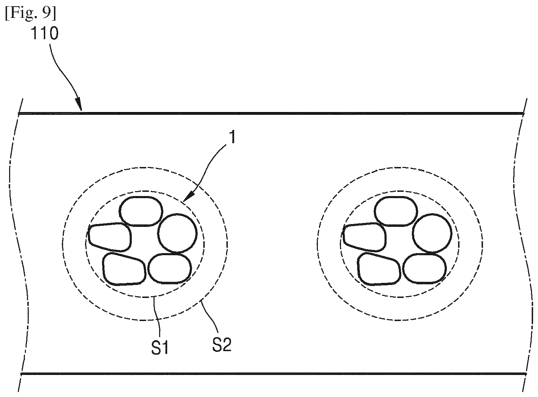

Referring to FIGS. 8 and 9, in the present invention, a tire 100 that includes the steel cord 1 for tire reinforcement includes a belt layer 110, and the steel cord 1 for tire reinforcement may be buried in the belt layer 110.

The belt layer 100 relieves a shock on the tire 100 exerted from outside while a vehicle using the tire 100 is being driven and, at a same time, prevents a crack or damage on an outer surface of the tire 100 from directly being transferred to an inner member of the tire 100. The belt layer 110 may be generally formed by coating the steel cord 1 for tire reinforcement with rubber. At least one selected from the group consisting of natural rubber and synthetic rubber may be used as the rubber. Preferably, blend rubber obtained by blending natural rubber with synthetic rubber at a certain ratio therebetween may be used.

The belt layer 110 may formed to have a single-layered or multi-layered structure, but is not limited thereto. Preferably, the belt layer 110 may be formed to have a multi-layered structure so as to support the tire 100 with respect to a load or shock exerted on the tire 100 and protect inner members of the tire 100 from external damages.

In the present invention, the steel cord 1 for tire reinforcement is formed as a 3D steel cord 1 for tire reinforcement which includes a first waveform having a first waveform surface and a second waveform having a second waveform surface, and in which the first waveform surface and the second waveform surface are formed to respectively have a direction different from each other. Thus, when the steel cord 1 for tire reinforcement is buried in rubber, an area in which the steel cord 1 for tire reinforcement contacts the rubber may be expanded. Additionally, as a space between the plurality of strands 10 may be enlarged according to a shaping process and rubber may penetrate into the space, penetrability of rubber into the steel cord 1 for tire reinforcement may be enhanced.

Referring to FIG. 9, in the present invention, the steel cord 1 for tire reinforcement may buried so that a direction of a short diameter of the steel cord 1 for tire reinforcement generally matches a direction of a radius of the tire 100.

While a vehicle is driven, the belt layer 100 included in the tire 100 receives a first flexural stress in a direction of a radius of the tire 100, and receives a second flexural stress in a direction of a rotation axis of the tire 100. In the present invention, since the steel cord 1 for tire reinforcement is buried in the tire 100 so that a direction of a short diameter of the steel cord 1 for tire reinforcement generally matches a direction of a radius of the tire 100, the steel cord 1 for tire reinforcement may operate flexibly with respect to first flexural stress exerted in the direction of the radius of the tire 100. Accordingly, a shock that may be caused by a bump on a road driving surface while a vehicle is being driven may be easily absorbed, and thus, excellent ride comfort may be obtained.

In the present invention, since the steel cord 1 for tire reinforcement is buried in the tire 100 so that a direction of a long diameter of the steel cord 1 for tire reinforcement generally matches a direction of a rotation axis of the tire 100, the steel cord 1 for tire reinforcement may have great rigidity with respect to second flexural stress exerted in a direction of the rotation axis of the tire 100. Accordingly, while a vehicle is being driven, a high cornering force may be generated, which ensures fine cornering, and the driving performance and controllability of the vehicle may be enhanced.

While the inventive concept has been particularly shown and described with reference to exemplary embodiments thereof, it will be understood by those of ordinary skill in the art that various changes in form and details may be made therein without departing from the scope of the inventive concept as defined by the following claims

## Claims

1. A steel cord (1) for tire reinforcement, wherein the steel cord (1) for tire reinforcement being configured to be elongated in one direction and comprising a plurality of strands (10) periodically twisted with each other and having a non-circular cross section, **characterized in that**
the steel cord (1) for tire reinforcement has a first waveform being configured such that a unit waveform having a predetermined period is repeatedly formed over a longitudinal direction of the steel cord (1) for tire reinforcement and a second waveform also being configured such that a unit waveform having a predetermined period is repeatedly formed over a longitudinal direction of the steel cord (1) for tire reinforcement,
wherein the first waveform has a first waveform surface onto which a waveform is orthogonally projected,
the second waveform has a second waveform surface onto which a waveform is orthogonally projected, and
the first waveform and the second waveform are formed to overlap with each other, and a normal on the first waveform surface of the first waveform and a normal on the second waveform surface of the second waveform form a predetermined inclined angle greater than 0.

2. The steel cord (1) for tire reinforcement of claim 1, **characterized in that** the plurality of strands (10) includes 1 to 18 strands, a diameter of each of the plurality of strands (10) is 0.08 mm to 0.5mm, and a tensile strength of each of the plurality of strands (10) is 250 kgf/mm² to 500 kgf/mm².

3. The steel cord (1) for tire reinforcement of claim 1, **characterized in that** a twist pitch of the plurality of strands (10) is 10 to 50 times a diameter of each of the plurality of strands (10).

4. The steel cord (1) for tire reinforcement of claim 1, **chracterized in that** a pitch of the first waveform and a pitch of the second waveform are different from each other.

5. The steel cord (1) for tire reinforcement of claim 1, **characterized in that** a pitch of the first waveform and a pitch of the second waveform are less than a twist pitch of the plurality of strands (10).

6. A tire (100) comprising the steel cord (1) for tire reinforcement of one of claims 1 through 5.

7. A method of manufacturing the steel cord (1) for tire reinforcement,
wherein the steel cord (1) for tire reinforcement is configured to be elongated in one direction and comprising a plurality of strands (10) periodically twisted with each other,
wherein the steel cord (1) for tire reinforcement has a first waveform being configured such that a unit waveform having a predetermined period is repeatedly formed over a longitudinal direction of the steel cord (1) for tire reinforcement and a second waveform also being configured such that a unit waveform having a predetermined period is repeatedly formed over a longitudinal direction of the steel cord (1) for tire reinforcement,
wherein the first waveform has a first waveform surface onto which a waveform is orthogonally projected,
the second waveform has a second waveform surface onto which a waveform is orthogonally projected, and
the first waveform and the second waveform are formed to overlap with each other, and a normal on the first waveform surface of the first waveform and a normal on the second waveform surface of the second waveform form a predetermined inclined angle greater than 0, wherein the method of manufacturing the steel cord (1) for tire reinforcement comprises a step of:
forming the steel cord (1) for tire reinforcement by twisting the plurality of strands (10);
**characterized in that**
the method of manufacturing the steel cord (1) for tire reinforcement further comprises steps of:
forming the steel cord (1) for tire reinforcement having a non-circular cross-section by rolling the steel cord (1) for tire reinforcement; and
performing a shaping process by passing the steel cord (1) for tire reinforcement through a first shaping gear couple (R2) and a second shaping gear couple (R3), so that the steel cord (1) for tire reinforcement passing through the shaping gear couples (R2, R3) is compressed,
wherein the first waveform is formed as the steel cord (1) for tire reinforcement passes through the first shaping gear couple (R2) and then, the second waveform is formed as the steel cord (1) for tire reinforcement passes through the second shaping gear couple (R3),
wherein a rotation axis of the first shaping gear couple (R2) and a rotation axis of the second shaping gear couple (R3) form a certain inclined angle greater than 0, wherein an inclined angle between the waveform surfaces of the first waveform and the second waveform is formed by adjusting the rotation axis of the first shaping gear couple (R2) or the rotation axis of the second shaping gear couple (R3).

8. The method of manufacturing the steel cord (1) for tire reinforcement of claim 7, **characterized in that** a gear pitch of the first shaping gear couple (R2) and a gear pitch of the second shaping gear couple (R3) are different from each other.

9. The method of manufacturing the steel cord (1) for tire reinforcement of claim 7, **characterized in that** a pitch of the first shaping gear couple (R2) and a pitch of the second shaping gear couple (R3) are less than a twist pitch of the plurality of strands (10).

## Patentansprüche

1. Stahlcord (1) zur Reifenverstärkung, wobei der Stahlcord (1) zur Reifenverstärkung derart ausgebildet ist, dass er in eine Richtung verlängerbar ist und mehrere, in regelmäßigen Abständen miteinander verdrillte Stränge (10) mit nicht-kreisförmigem Querschnitt aufweist, **dadurch gekennzeichnet, dass**
der Stahlcord (1) zur Reifenverstärkung eine erste Wellenform, die derart ausgebildet ist, dass eine Wellenformeinheit mit einem vorbestimmten Intervall mehrmals über eine Längsrichtung des Stahlcords (1) zur Reifenverstärkung ausgebildet ist und eine zweite Wellenform, die ebenfalls derart ausgebildet ist, dass eine Wellenformeinheit mit einem vorbestimmten Intervall mehrmals über eine Längsrichtung des Stahlcords (1) zur Reifenverstärkung ausgebildet ist, aufweist,
wobei die erste Wellenform eine erste Wellenformoberfläche aufweist, aus der eine Wellenform senkrecht auskragt,
die zweite Wellenform eine zweite Wellenformoberfläche aufweist, aus der eine Wellenform senkrecht auskragt, und
die erste Wellenform und die zweite Wellenform so ausgebildet sind, dass sie einander überlappen und eine Normale an der ersten Wellenformoberfläche der ersten Wellenform und eine Normale an der zweiten Wellenformoberfläche der zweiten Wellenform einen vorbestimmten Neigungswinkel größer als 0 ausbilden.

2. Stahlcord (1) zur Reifenverstärkung nach Patentanspruch 1, **dadurch gekennzeichnet, dass** die mehreren Stränge (10) 1 bis 18 Stränge sind, ein Durchmesser von jedem der mehreren Stränge (10) 0,08 mm bis 0,5 mm beträgt und die Zugfestigkeit von jedem der mehreren Stränge (10) 250 kgf/mm² bis 500 kgf/mm² beträgt.

3. Stahlcord (1) zur Reifenverstärkung nach Patentanspruch 1, **dadurch gekennzeichnet, dass** die Drallteilung der mehreren Stränge (10) das 10- bis 50fache eines Durchmessers jedes der mehreren Stränge (10) beträgt.

4. Stahlcord (10) zur Reifenverstärkung nach Patentanspruch 1, **dadurch gekennzeichnet, dass** eine Teilung der ersten Wellenform und eine Teilung der zweiten Wellenform unterschiedlich voneinander sind.

5. Stahlcord (10) zur Reifenverstärkung nach Patentanspruch 1, **dadurch gekennzeichnet, dass** eine Teilung der ersten Wellenform und eine Teilung der zweiten Wellenform kleiner als eine Drallteilung der mehreren Stränge (10) ist.

6. Reifen (100), der den Stahlcord (1) zur Reifenverstärkung nach einem der Patentansprüche 1 bis 5 aufweist.

7. Verfahren zur Herstellung des Stahlcords (1) zur Reifenverstärkung,
wobei der Stahlcord (1) zur Reifenverstärkung derart ausgebildet ist, dass er in eine Richtung verlängerbar ist und mehrere, in regelmäßigen Abständen miteinander verdrillte Stränge (10) aufweist,
wobei der Stahlcord (1) zur Reifenverstärkung eine erste Wellenform, die derart ausgebildet ist, dass eine Wellenformeinheit mit einem vorbestimmten Intervall mehrmals über eine Längsrichtung des Stahlcords (1) zur Reifenverstärkung ausgebildet ist und eine zweite Wellenform, die ebenfalls derart ausgebildet ist, dass eine Wellenformeinheit mit einem vorbestimmten Intervall mehrmals über eine Längsrichtung des Stahlcords (1) zur Reifenverstärkung ausgebildet ist, aufweist,
wobei die erste Wellenform eine erste Wellenformoberfläche aufweist, aus der eine Wellenform senkrecht auskragt,
die zweite Wellenform eine zweite Wellenformoberfläche aufweist, aus der eine Wellenform senkrecht auskragt, und
die erste Wellenform und die zweite Wellenform so ausgebildet sind, dass sie einander überlappen und eine Normale an der ersten Wellenformoberfläche der ersten Wellenform und eine Normale an der zweiten Wellenformoberfläche der zweiten Wellenform einen vorbestimmten Neigungswinkel größer als 0 ausbilden,
wobei das Verfahren zur Herstellung des Stahlcords (1) zur Reifenverstärkung einen Schritt umfasst:
Ausbilden des Stahlcords (1) zur Reifenverstärkung durch Verdrillen der mehreren Stränge (10),
**dadurch gekennzeichnet, dass**
das Verfahren zur Herstellung des Stahlcords (1) zur Reifenverstärkung außerdem Schritte umfasst:
Ausbilden des Stahlcords (1) zur Reifenverstärkung) mit nicht-kreisförmigem Querschnitt durch Walzen des Stahlcords (1) zur Reifenverstärkung, und
Durchführen eines Formungsprozesses, indem der Stahlcord (1) zur Reifenverstärkung durch ein erstes Formungszahnradpaar (R2) und ein zweites Formungszahnradpaar (R3) geführt wird, sodass der durch die Formungszahnradpaare (R2, R3) geführte Stahlcord (1) zur Reifenverstärkung zusammengepresst wird,
wobei beim Durchführen des Stahlcords (1) durch das erste Formungszahnradpaar (R2) die erste Wellenform ausgebildet wird und beim Durchführen des Stahlcords (1) durch das zweite Formungszahnradpaar (R3) die zweite Wellenform ausgebildet wird,
wobei eine Rotationsachse des ersten Formungszahnradpaars (R2) und eine Rotationsachse des zweiten Formungszahnradpaars (R3) einen bestimmten Neigungswinkel größer als 0 ausbilden, wobei ein Neigungswinkel zwischen den Wellenformoberflächen der ersten und der zweiten Wellenform durch Ausrichten der Rotationsachse des ersten Formungszahnradpaars (R2) oder des zweiten Formungszahnradpaars (R3) ausgebildet wird.

8. Verfahren zur Herstellung eines Stahlcords (1) zur Reifenverstärkung nach Patentanspruch 7, **dadurch gekennzeichnet, dass** eine Zahnteilung des ersten Formungszahnradpaars (R2) und eine Zahnteilung des zweiten Formungszahnradpaars (R3) unterschiedlich voneinander sind.

9. Verfahren zum Herstellen des Stahlcords (1) zur Reifenverstärkung nach Patentanspruch 7, **dadurch gekennzeichnet, dass** eine Teilung des ersten Formungszahnradpaars (R2) und eine Teilung des zweiten Formungszahnradpaars (R3) kleiner sind als die Drallteilung der mehreren Stränge (10).

## Revendications

1. Câble en acier (1) pour le renforcement de pneu, le câble en acier (1) étant configuré pour être allongé dans une direction et comprenant une pluralité de cordons (10) tordus périodiquement les uns avec les autres, qui présentent une section transversale non-circulaire,
**caractérisé en ce que**
le câble en acier (1) pour le renforcement de pneu présente une première forme d'onde étant configurée de façon qu'une unité de forme d'onde ayant une période prédéterminée est formée à répétition à travers d'une alignement longitudinale du câble en acier (1) pour le renforcement de pneu, et une seconde forme d'onde étant configurée aussi de façon qu'une unité de forme d'onde ayant une période prédéterminée est formée à répétition à travers d'une alignement longitudinale du câble en acier (1) pour le renforcement de pneu,
la première forme d'onde ayant une première surface de forme d'onde sur laquelle une forme d'onde fait saillie orthogonalement,
la seconde forme d'onde ayant une seconde surface de forme d'onde sur laquelle une forme d'onde fait saillie orthogonalement, et
la première forme d'onde et la seconde forme d'onde sont formées pour se chevaucher mutuellement, et une normale sur la première surface de forme d'onde de la première forme d'onde et une normale sur la seconde surface de forme d'onde de la seconde forme d'onde forment un angle d'inclinaison prédéterminé supérieur à 0.

2. Câble en acier (1) pour le renforcement de pneu selon la revendication 1,
**caractérisé en ce que** la pluralité de cordons (10) comprend de 1 à 18 cordons, un diamètre de chacun de la pluralité de cordons (10) est de 0,08 mm à 0,5 mm, et une résistance à la traction de chacun de la pluralité de cordons (10) est de 250 kg_{f} / mm² à 500 kg_{f} / mm².

3. Câble en acier (1) pour le renforcement de pneu selon la revendication 1,
**caractérisé en ce qu'**un pas de torsion de la pluralité de cordons (10) est de 10 à 50 fois le diamètre de chacun de la pluralité de cordons (10).

4. Câble en acier (1) pour le renforcement de pneu selon la revendication 1,
**caractérisé en ce qu'**un pas de la première forme d'onde et un pas de la seconde forme d'onde sont différents l'un de l'autre.

5. Câble en acier (1) pour le renforcement de pneu selon la revendication 1,
**caractérisé en ce qu'**un pas de la première forme d'onde et un pas de la seconde forme d'onde sont inférieurs à un pas de torsion de la pluralité de cordons (10).

6. Pneu (100) comprenant le câblé en acier (1) pour le renforcement de pneu selon l'une des revendications 1 à 5.

7. Procédé de fabrication du câblé en acier (1) pour le renforcement de pneu,
le câblé en acier (1) pour le renforcement de pneu étant configuré pour être allongé dans une direction et comprenant une pluralité de cordons (10) tordus périodiquement les uns avec les autres,
le câble en acier (1) pour le renforcement de pneu présentant une première forme d'onde étant configurée de façon qu'une unité de forme d'onde ayant une période prédéterminée est formée à répétition à travers d'une alignement longitudinale du câble en acier (1) pour le renforcement de pneu, et une seconde forme d'onde étant configurée aussi de façon qu'une unité de forme d'onde ayant une période prédéterminée est formée à répétition à travers d'une alignement longitudinale du câble en acier (1) pour le renforcement de pneu,
la première forme d'onde ayant une première surface de forme d'onde sur laquelle une forme d'onde fait saillie orthogonalement,
la seconde forme d'onde ayant une seconde surface de forme d'onde sur laquelle une forme d'onde fait saillie orthogonalement, et
la première forme d'onde et la seconde forme d'onde étant formées pour se chevaucher mutuellement, et une normale sur la première surface de forme d'onde de la première forme d'onde et une normale sur la seconde surface de forme d'onde de la seconde forme d'onde forment un angle d'inclinaison prédéterminé supérieur à 0,
le procédé de fabrication du câblé en acier (1) pour le renforcement de pneu comprend une étape de
former le câblé en acier (1) pour le renforcement de pneu par tordre la pluralité de cordons (10) ;
**caractérisé en ce que**
le procédé de fabrication du câblé en acier (1) pour le renforcement de pneu en plus comprend des étapes de
former le câblé en acier (1) pour le renforcement de pneu présentant une section transversale non-circulaire par laminer le câblé en acier (1) pour le renforcement de pneu ; et
effectuer un processus de modelage en faisant passer le câble en acier (1) pour le renforcement de pneu à travers d'un premier couple de roues d'engrenage de modelage (R2) et à travers d'un seconde couple de roues d'engrenage de modelage (R3) de façon que le câblé en acier (1) pour le renforcement de pneu traversant les couples de roues d'engrenage de modelage (R2, R3) est compressé,
la première forme d'onde étant formée quand le câblé en acier (1) pour le renforcement de pneu passe à travers du premier couple de roues d'engrenage de modelage (R2) et puis, la seconde forme d'onde étant formée quand le câblé en acier (1) pour le renforcement de pneu passe à travers du seconde couple de roues d'engrenage de modelage (R3),
un axe de rotation du premier couple de roues d'engrenage de modelage (R2) et un axe de rotation du seconde couple de roues d'engrenage de modelage (R3) forment un certain angle d'inclinaison supérieur à 0, un angle d'inclinaison entre les surfaces de forme d'onde de la première forme d'onde et la seconde forme d'onde étant formé par ajuster l'axe de rotation du premier couple de roues d'engrenage de modelage (R2) ou bien l'axe de rotation du seconde couple de roues d'engrenage de modelage (R3).

8. Procédé de fabrication du câblé en acier (1) pour le renforcement de pneu selon la revendication 7, **caractérisé en ce qu'**un pas d'engrenage du premier couple de roues d'engrenage de modelage (R2) et un pas d'engrenage du seconde couple de roues d'engrenage de modelage (R3) sont différents l'un de l'autre.

9. Procédé de fabrication du câblé en acier (1) pour le renforcement de pneu selon la revendication 7, **caractérisé en ce qu'**un pas du premier couple de roues d'engrenage de modelage (R2) et un pas du seconde couple de roues d'engrenage de modelage (R3) sont inférieurs à un pas de torsion de la pluralité de cordons (10).
